# EUROPEAN PATENT APPLICATION

(11) **EP 1 653 717 A1**
(43) Date of publication of application: **03.05.2006**
(21) Application number: 05023247.9
(22) Date of filing: 25.10.2005
(51) Int. Cl.: H04M 3/42

(54) **Method of providing a representative telephone number to a group of mobile communication terminals**

(30) Priority: 28.10.2004 KR 2004086678
(71) Applicant: LG Electronics Inc., Yongdungpo-gu Seoul (KR)
(72) Inventor: Lee, Won Joon, Yangcheon-gu Seoul (KR)
(74) Representative: von Hellfeld, Axel

(57) **Abstract**

A method of setting a phone number of a plurality of mobile communication terminals is disclosed, by which a mobile telecommunication service can be supported in a manner of employing a single representative phone number for a plurality of the mobile communication terminals possessed by one subscriber and in which a representative phone number is given for each mobile communication service that can be provided to a subscriber possessing a plurality of the mobile communication terminals by a corresponding one of a plurality of the mobile communication terminals. The present invention includes the steps of setting a representative number for a plurality of terminals and converting an incoming call to a random one of the terminals to the set representative phone number.

## Description

This application claims the benefit of the Korean Patent Application No. 10-2004-0086678, filed on October 28, 2004, which is hereby incorporated by reference as if fully set forth herein.

### BACKGROUND OF THE INVENTION

### Field of the Invention

The present invention relates to a mobile communication, and more particularly, to a method of setting a phone number of a plurality of mobile communication terminals. Although the present invention is suitable for a wide scope of applications, it is particularly suitable for setting the phone number of a plurality of the mobile communication terminals of one subscriber.

### Discussion of the Related Art

Recently, portable mobile communication terminals are popularized as supplied to each person.

Yet, in case of purchasing to use a plurality of mobile communication terminals such as a smart phone supporting a mobile phone service (especially, a voice communication service), a personal digital assistant (hereinafter abbreviated PDA) and the like, a user of a mobile phone, so-called a handy phone, are troubled with the following problems.

Firstly, in purchasing a plurality of mobile communication terminals (e.g., mobile phone, smart phone, PDA, etc.), a user has to subscribe for each of the terminals with a different phone number. Even if the mobile communication terminals are possessed by one user, there exist no correlation between phone numbers of the terminals. Moreover, billings are made to the terminals, respectively.

Secondly, since the terminals (e.g., mobile phone, smart phone, PDA, etc.) have the different phone numbers without correlation, respectively, the user of the terminals is trouble with notification of the respective phone numbers of the terminals.

Thirdly, since the terminals (e.g., mobile phone, smart phone, PDA, etc.) of one user have the different phone numbers without correlation, respectively, it is inconvenient for the user to carry the entire terminals.

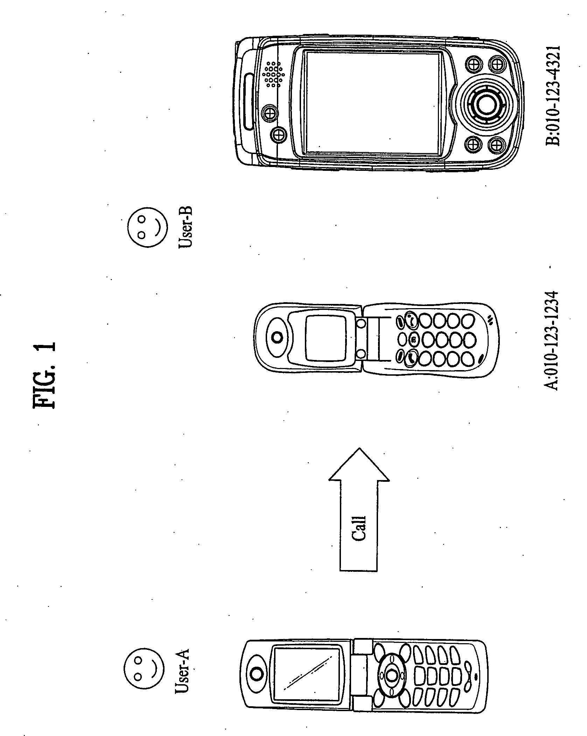

FIG. 1 is a diagram for explaining a case of attempting a voice communication with one user possessing both a mobile phone and a PDA according to a related art.

Referring to FIG. 1, it is assumed that a user-B possesses a mobile phone having a phone number of '010-123-1234' and a PDA having a phone number of '010-123-4321'.

And, the user-B needs to notify both of the phone numbers of the mobile phone and PDA to a user-A.

Moreover, the user-B has to carry both of the mobile phone and the PDA all the time to answer the phone from the user-A who may call the user-B at any time. When the user-B carries the mobile phone only, if the user-A attempts a voice communication through the phone number of the PDA, the user-B is unable to recognize the attempt of the voice communication itself.

On the contrary, when the user-B carries the PDA only, if the user-A attempts a voice communication through the phone number of the mobile phone, the user-B is unable to recognize the attempt of the voice communication itself.

Meanwhile, the above-mentioned inconvenience is recently settled to some extent using a call forwarding service.

In case of using the call forwarding service, there exist the following disadvantages.

First of all, when a user-C knowing the phone number of the mobile phone of the user-B attempts a voice communication through the phone number of the mobile phone of the user-B, if the user-B sets the call forwarding service to the PDA from the mobile phone, a voice communication request to the mobile phone of the user-B is transferred to the PDA.

In other words, there occurs no special problem in the reception using the call forwarding service.

However, in case that the user-B attempts an outgoing call to the user-C, since the phone number of the PDA of the user-B is transmitted as an originator number to the user-C who knows the phone number of the mobile phone of the user-B, the user-C is unable to know who made the corresponding call.

### SUMMARY OF THE INVENTION

Accordingly, the present invention is directed to a method of setting a phone number of a plurality of mobile communication terminals that substantially obviates one or more problems due to limitations and disadvantages of the related art.

An object of the present invention is to provide a method of setting a phone number of a plurality of mobile communication terminals, by which a mobile telecommunication service can be supported in a manner of employing a single representative phone number for a plurality of the mobile communication terminals possessed by one subscriber.

Another object of the present invention is to provide a method of setting a phone number of a plurality of mobile communication terminals, in which a representative phone number is given for each mobile communication service that can be provided to a subscriber possessing a plurality of the mobile communication terminals by a corresponding one of a plurality of the mobile communication terminals.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of setting a phone number according to the present invention includes the steps of setting a representative number for a plurality of terminals and converting an incoming call to a random one of the terminals to the set representative phone number.

Preferably, the representative phone number is not a generic phone number of each of the terminals but a virtual phone number.

More preferably, the generic phone number of each of the terminals is set in a manner of combining at least one of special symbols and digits with the representative phone number.

Preferably, the representative phone number is set to one selected from the group consisting of generic phone numbers of the terminals.

Preferably, if there is a communication attempt to another terminal using the random one of the terminals, the set representative phone number is used as an originator phone number.

Preferably, the set representative phone number is a phone number for a mobile communication service supported by the terminals.

In another aspect of the present invention, a method of setting a phone number of a mobile communication terminal according to the present invention includes the steps of setting a plurality of mobile communication terminals to a representative phone number for a prescribed mobile communication service and if there is an attempt of an incoming call to one of a plurality of the mobile communication terminals, transmitting the incoming call via the set representative phone number.

Preferably, the representative phone number is a virtual phone number different from a generic phone number of each of a plurality of the mobile communication terminals.

More preferably, the generic phone number of each of a plurality of the mobile communication terminals is given in a manner of combining at least one of special symbols and digits with the representative phone number.

Preferably, the representative phone number is set to one of generic phone numbers previously given to a plurality of the mobile communication terminals, respectively.

Preferably, a billing of the mobile communication terminals for the mobile communication service is imposed on the representative phone number.

Preferably, a plurality of the mobile communication terminals are possessed by one user.

Preferably, if there is an attempt of a communication to a different mobile communication terminal from a random one (A) of a plurality of the mobile communication terminals, a call of the communication is transmitted using the representative phone number as an originator phone number.

More preferably, if a setup of the representative phone number is cancelled, the call of the communication is transmitted using a generic phone number of the corresponding mobile terminal (A).

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram for explaining a case of attempting a voice communication with one user possessing both a mobile phone and a PDA according to a related art;

FIG. 2 is an exemplary diagram for explaining a setup of a phone number of a mobile communication terminal and communications between terminals according to a first embodiment of the present invention;

FIG. 3 is a diagram for explaining a call reception setup in communications between terminals after a phone number setup of a mobile communication terminal according to a first embodiment of the present invention;

FIG. 4 is an exemplary diagram for explaining a communication according to a call reception setup in the first embodiment of the present invention;

FIG. 5A and FIG. 5B are flowcharts of a communication procedure according to a call attempt in the first embodiment of the present invention, in which FIG. 5A shows a communication procedure if there is a call attempt through a representative phone number and in which FIG. 5B shows a communication procedure if there is a call attempt through a generic phone number of each terminal;

FIG. 6A and FIG. 6B are diagrams of a procedure of transmitting a phone number of a user (originator) in case that a user side using a representative phone number attempts a communication in the first embodiment of the present invention;

FIG. 7 is an exemplary diagram for explaining a setup of a phone number of a mobile communication terminal and communications between terminals according to a second embodiment of the present invention;

FIG. 8 is a diagram for explaining a call reception setup in communications between terminals after a phone number setup of a mobile communication terminal according to a second embodiment of the present invention;

FIG. 9 is an exemplary diagram for explaining a communication according to a call reception setup in the second embodiment of the present invention;

FIG. 10A and FIG. 10B are flowcharts of a communication procedure according to a call attempt in the second embodiment of the present invention, in which FIG. 10A shows a communication procedure if there is a call attempt through a representative phone number and in which FIG. 10B shows a communication procedure if there is a call attempt through a generic phone number of each terminal;

FIG. 11A and FIG. 11B are diagrams of a procedure of transmitting a phone number of a user (originator) in case that a user side using a representative phone number attempts a call in the second embodiment of the present invention;

FIG. 12 is an exemplary diagram for explaining a setup of a phone number of a mobile communication terminal and communications between terminals according to a third embodiment of the present invention;

FIG. 13 is a diagram for explaining a call reception setup in communications between terminals after a phone number setup of a mobile communication terminal according to a third embodiment of the present invention;

FIG. 14 is an exemplary diagram for explaining a communication according to a call reception setup in the third embodiment of the present invention;

FIG. 15A and FIG. 15B are flowcharts of a communication procedure according to a call attempt in the third embodiment of the present invention, in which FIG. 15A shows a communication procedure if there is a call attempt through a representative phone number and in which FIG. 15B shows a communication procedure if there is a call attempt through a generic phone number of each terminal; and

FIG. 16A and FIG. 16B are diagrams of a procedure of transmitting a phone number of a user (originator) in case that a user side using a representative phone number attempts a call in the third embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

First of all, in the present invention, in case that one user possesses several mobile communication terminals, a representative phone number of the terminals is set.

A switching system of a mobile communication network identifies the user's terminals as one group. And, the switching system recognizes all voice communication calls received by the mobile communication terminals as a call received via one representative phone number. And, billing is made to the one representative phone number as well.

A setup of the representative phone number according to the present invention can be summarizes into the following three examples. In this case, it is assumed that one user possesses various mobile communication terminals including a mobile phone, a smart phone and a PDA.

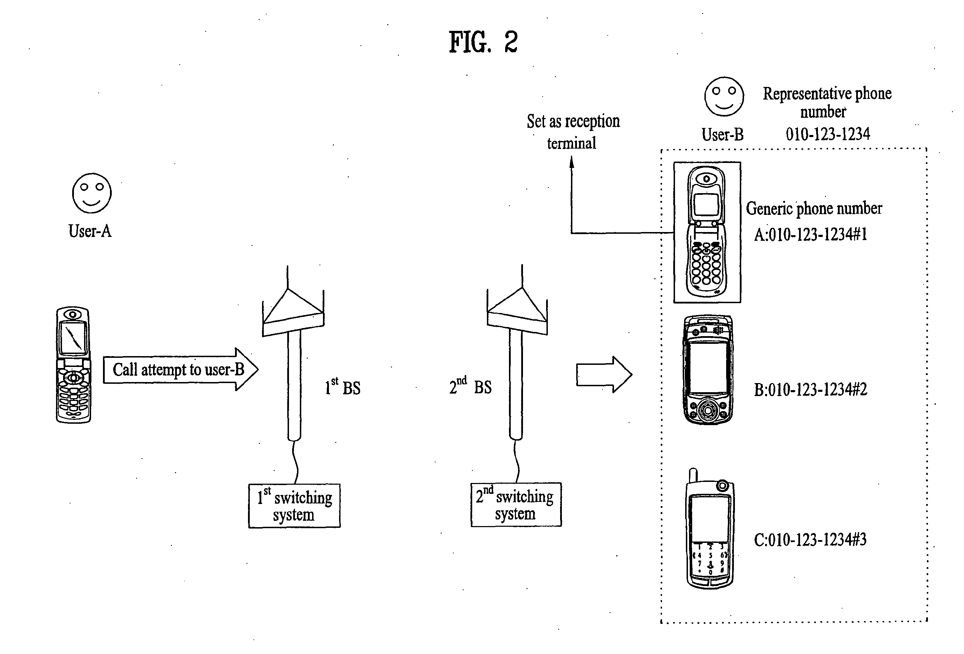

1. Generic phone numbers of the mobile communication terminals are individually used. And, one virtual phone number representing the entire mobile communication terminals is further set. And, the generic phone numbers of the mobile communication terminals are set in a manner of combining a specific symbol and digit with the virtual representative phone number. For example, a virtual representative phone number, as shown in FIG. 2, is set to '010-123-1234' and phone numbers of the mobile communication terminals are sequentially set to '010-123-1234#1', '010-123-1234#2' and '010-123-1234#3', respectively or to '010-123-1234*1', '010-123-1234*2' and '010-123-1234*3', respectively.

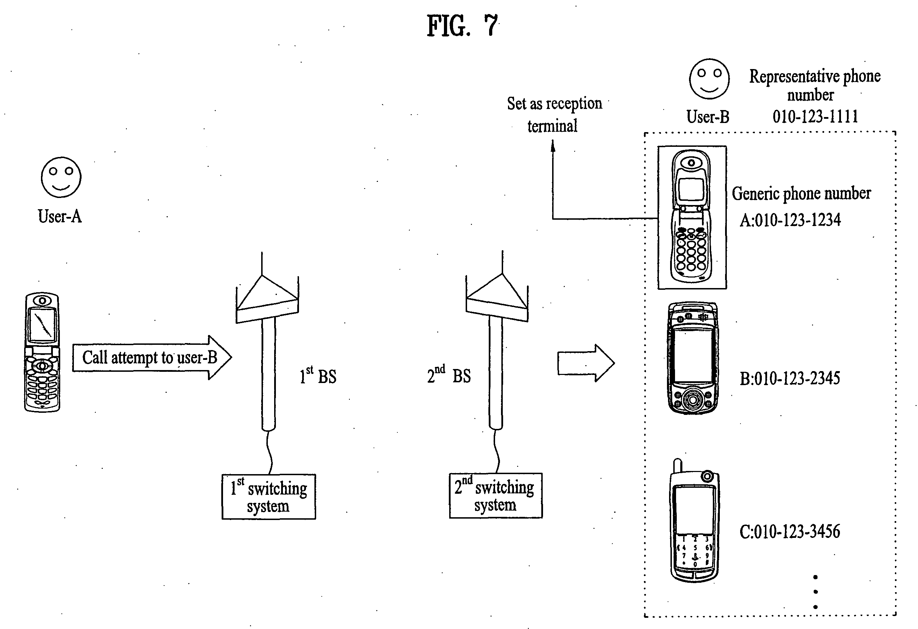

2. Generic phone numbers of the mobile communication terminals are individually used. And, one virtual phone number representing the entire mobile communication terminals is further set. For example, a virtual representative phone number, as shown in FIG. 7, is set to '010-123-1111' and phone numbers of the mobile communication terminals are set to the numbers individually given by subscription as '010-123-1234', '010-123-2345' and '010-123-3456', respectively.

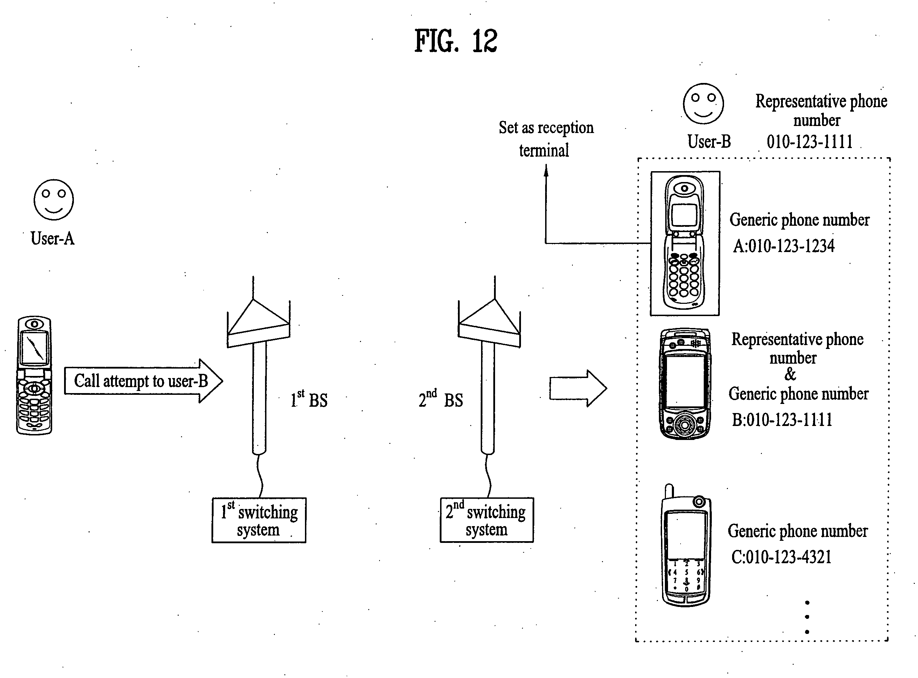

3. Generic phone numbers of the mobile communication terminals are individually used. And, one virtual phone number representing the entire mobile communication terminals is set to one of the generic phone numbers of the mobile communication terminals. For example, if the generic phone numbers individually given by subscription, as shown in FIG. 12, are set to '010-123-1234', '010-123-1111' and '010-123-4321', respectively, a representative phone number is set to '010-123-1111'.

Based on the above-explained three examples, the present invention is explained in detail as follows.

FIG. 2 is an exemplary diagram for explaining a setup of a phone number of a mobile communication terminal and communications between terminals according to a first embodiment of the present invention.

Referring to FIG. 2, like the above-explained first example, one virtual representative phone number applied to mobile communication terminals possessed by one user (user-B) is set and a generic phone number of each of the mobile communication terminals is set in a manner of adding a specific symbol and digit to the virtual representative phone number.

In this case, the virtual representative phone number is a number that identifies the various mobile communication terminals of the user-B as one group.

A second base station providing a voice communication service to the mobile communication terminals of the user-B searches a paging channel of the user-B's mobile communication terminal by a slot cycle with reference to a slot cycle index. And, the second base station checks a connection state between itself and each of the mobile communication terminals. This is a communication process in idle state between the second base station and the user-B's mobile communication terminals.

Meanwhile, explained in the following is a process that a mobile communication provider designates one virtual representative phone number to mobile communication terminals possessed by a user-B and generic phone numbers of the respective mobile communication terminals.

First of all, one representative phone number representing the entire mobile communication terminals of the user-B is given. And, generic phone numbers of the mobile communication terminals possessed by the user-B are given in a manner of combining at least one of specific symbols and digits with the one representative phone number.

For instance, a representative phone number is set to '010-123-1234' and phone numbers of the mobile communication terminals are sequentially set to '010-123-1234#1', '010-123-1234#2' and '010-123-1234#3', respectively or to '010-123-1234*1', '010-123-1234*2' and '010-123-1234*3', respectively.

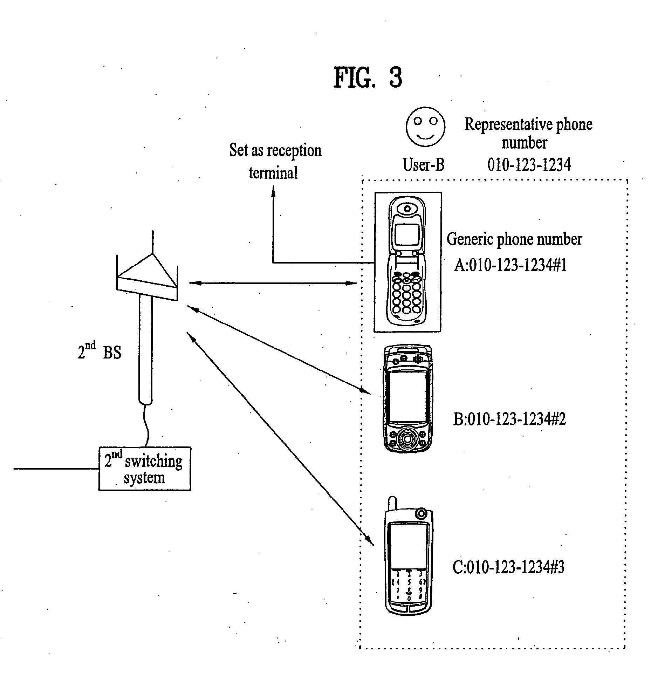

FIG. 3 is a diagram for explaining a call reception setup in communications between terminals after a phone number setup of a mobile communication terminal according to a first embodiment of the present invention.

Referring to FIG. 3, in case that a voice call is received via a preset representative phone number of a user-B possessing at least one or more mobile communication terminals, the user-B previously sets up a reception of the voice call through one of terminal-A, terminal-B and terminal-C shown in FIG. 3.

The setup of the reception terminal of the voice call is a program setup of a second base station providing a mobile communication service to the mobile communication terminals of the user-B or a program setup of a second switching system that provides a mobile communication switching function to the second base station.

If the reception terminal of the voice call, as shown in FIG. 3, is previously set to the terminal-A (010-123-1234#1), the second switching system transmits a call signal to the generic phone number '010-123-1234#1) of the terminal-A in case that there is a call request to the representative phone number of the user-B.

Subsequently, if the user-B changes the reception terminal of the voice call to the terminal-B (010-123-1234#2) from the terminal-A (010-123-1234#1), the second switching system transmits a call signal to the generic phone number '010-123-1234#2) of the terminal-B in case that there is a call request to the representative phone number of the user-B.

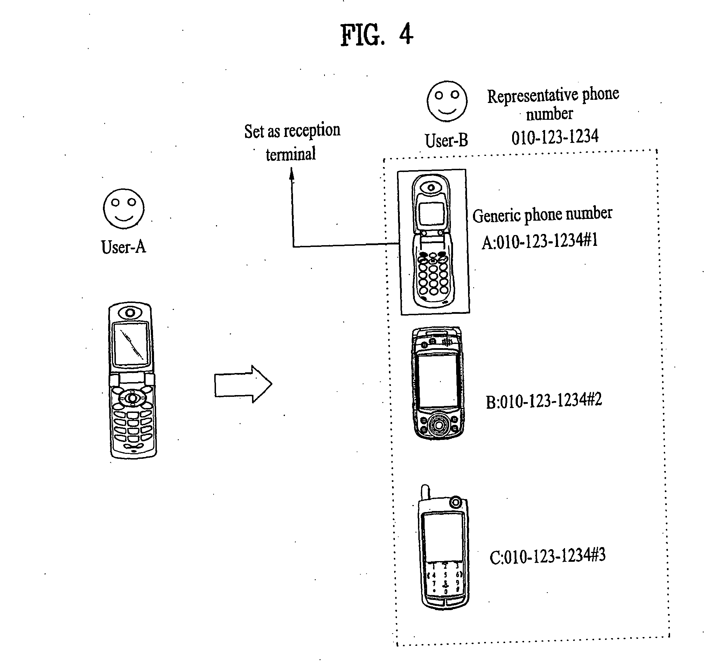

FIG. 4 is an exemplary diagram for explaining a communication according to a call reception setup in the first embodiment of the present invention.

Referring to FIG. 4, in case that a user-B sets a terminal-A (010-123-1234#1) to receive a call, if a user-A attempts a communication via a representative phone number (010-123-1234) of the user-B, a second switching system transmits a call signal to a phone number of the terminal-A that is a mobile phone. Hence, the user-B communicates with the user-A using the mobile phone.

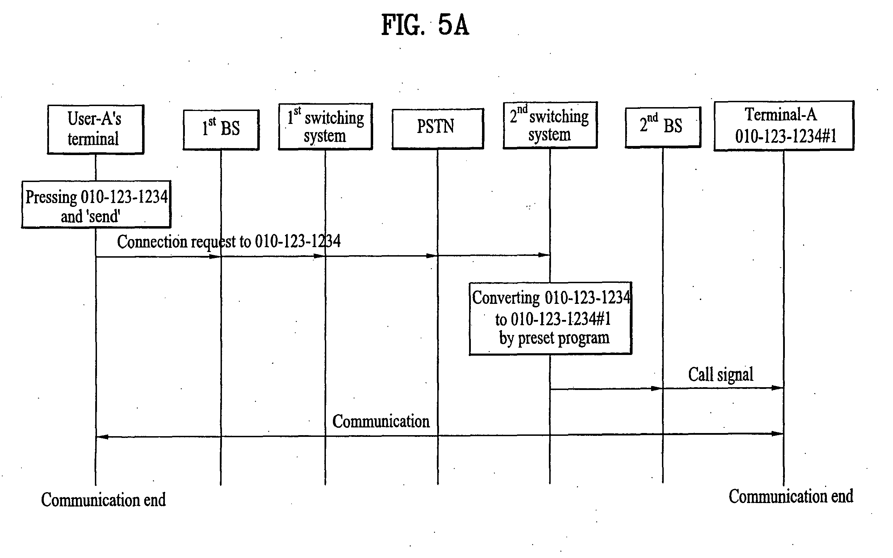

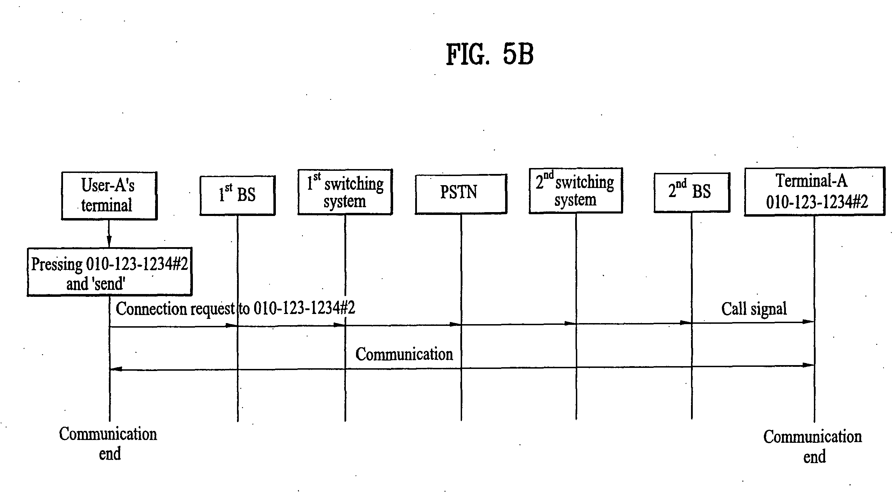

FIG. 5A and FIG. 5B are flowcharts of a communication procedure according to a call attempt in the first embodiment of the present invention, in which FIG. 5A shows a communication procedure if there is a call attempt through a representative phone number and in which FIG. 5B shows a communication procedure if there is a call attempt through a generic phone number of each terminal.

Referring to FIG. 5A, once a user-A presses '010-123-1234' and a 'send' button, a communication connection request to '010-123-1234' from a terminal of the user-A is received by a second switching system via a first base station, a first switching system and a mobile communication network or a public telephone network such as PSTN (public switched telephone network). If the corresponding network is a mobile communication network, the first and second switching systems merge into one.

The second switching system checks a generic phone number of a reception terminal (terminal-A) previously set by a user-B for the representative phone number '010-123-1234' to which a communication connection is requested according to a preset program. Hence, the second switching system switches a phone number to be paged to '010-123-1234#1' from '010-123-1234'.

And, the second switching system transmits a call signal requested by the user-A via a second base station to the terminal-A.

Subsequently, as the user-B sends an affirmative reply signal for the communication request to the second switching system via the terminal-A, the communication between the user-A's terminal and the user-B's terminal-A is established.

Referring to FIG. 5B, once a user-A presses '010-123-1234#2' of one of several mobile communication terminals possessed by a user-B and a 'send' button, a communication connection request to '010-123-1234#2' from the corresponding terminal of the user-A is received by a second switching system via a first base station, a first switching system and a mobile communication network or a public telephone network such as PSTN (public switched telephone network).

And, the second switching system transmits a call signal requested by the user-A via a second base station to a terminal-B.

Subsequently, as the user-B sends an affirmative reply signal for the communication request to the second switching system via the terminal-B, the communication between the user-A's terminal and the user-B's terminal-B is established.

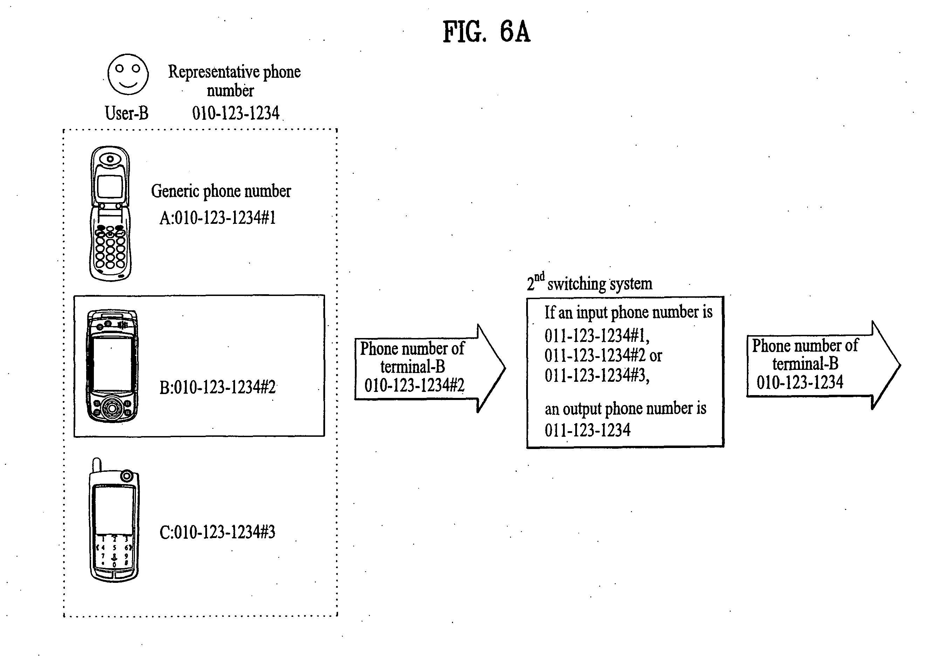

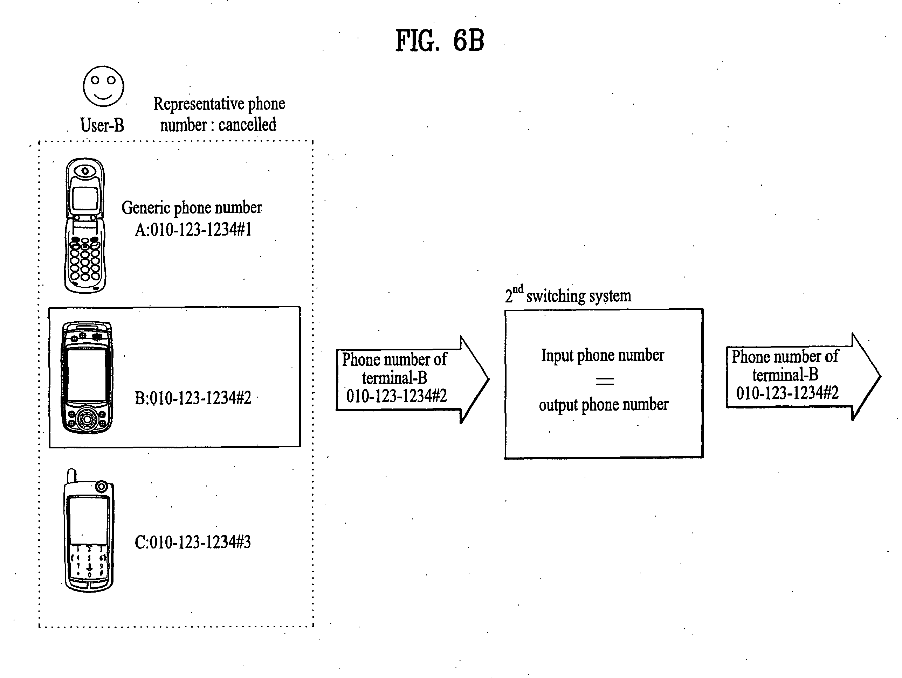

FIG. 6A and FIG. 6B are diagrams of a procedure of transmitting a phone number of a user (originator) in case that a user side using a representative phone number attempts a communication in the first embodiment of the present invention.

Referring to FIG. 6A, in case of receiving a call attempt from a prescribed terminal of a user-B, a second switching system converts a phone number of the terminal having attempted a corresponding call to a representative phone number and then transmits the representative phone number as a phone number of an originator. Namely, as exemplarily shown in FIG. 6A, if the user-B requests a call using a terminal-B (PDA), a generic phone number of the terminal-B is inputted to the second switching system. If so, the second switching system outputs a preset representative phone number as an originator phone number.

The second switching system converts the inputted generic phone number to the representative phone number to output regardless of receiving the call attempt from any of the user-B's terminals.

In case that the set representative phone number, as shown in FIG. 6B, is cancelled and if a user-B requests a call using a prescribed terminal, a second switching system transmits a generic phone number of the terminal used for the corresponding call request as an originator phone number.

Referring to FIG. 6B, if a user-B requests a call using a terminal-B (PDA) while a representative phone number is cancelled, a generic phone number of the terminal-B is inputted to the second switching system. If so, the second switching system outputs the inputted phone number as an output phone number to output the generic phone number of the terminal-B as an originator phone number.

FIG. 7 is an exemplary diagram for explaining a setup of a phone number of a mobile communication terminal and communications between terminals according to a second embodiment of the present invention.

Referring to FIG. 7, in the embodiment shown in FIG. 7, like the phone number setup of the mobile communication terminal in the aforesaid second example, generic phone numbers individually given by subscription to mobile communication terminals possessed by a user-B are used intact and one virtual phone number applicable to the entire mobile communication terminals of the user-B is further set.

In this case, like the first embodiment of the present invention, the virtual representative phone number is a number that identifies several mobile communication terminals of the user-B as one group.

A second base station providing a voice communication service to the mobile communication terminals of the user-B searches a paging channel of the user-B's mobile communication terminal by a slot cycle with reference to a slot cycle index. And, the second base station checks a connection state between itself and each of the mobile communication terminals. This is a communication process in idle state between the second base station and the user-B's mobile communication terminals.

Meanwhile, the second embodiment of the present invention does not need a process that a mobile communication provider designates one virtual representative phone number for mobile communication terminals possessed by a user-B and generic phone numbers of the terminals to have association with the representative phone number. Namely, as mentioned in the foregoing description, the generic phone numbers individually given by subscription to the respective terminals are used intact.

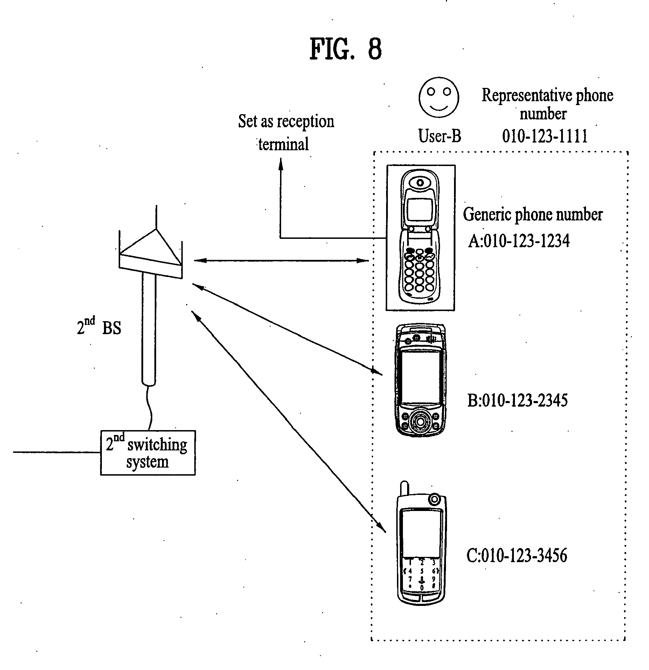

FIG. 8 is a diagram for explaining a call reception setup in communications between terminals after a phone number setup of a mobile communication terminal according to a second embodiment of the present invention.

Referring to FIG. 8, in case that a voice call is received via a preset representative phone number of a user-B possessing at least one or more mobile communication terminals, the user-B previously sets up a reception of the voice call through one of a terminal-A, terminal-B and terminal-C shown in FIG. 8.

The setup of the reception terminal of the voice call is a program setup of a second base station providing a mobile communication service to the mobile communication terminals of the user-B or a program setup of a second switching system that provides a mobile communication switching function to the second base station.

If the reception terminal of the voice call, as shown in FIG. 8, is previously set to the terminal-A (010-123-1111), the second switching system transmits a call signal to the generic phone number '010-123-1234) of the terminal-A in case that there is a call request to the representative phone number '010-123-1111' of the user-B.

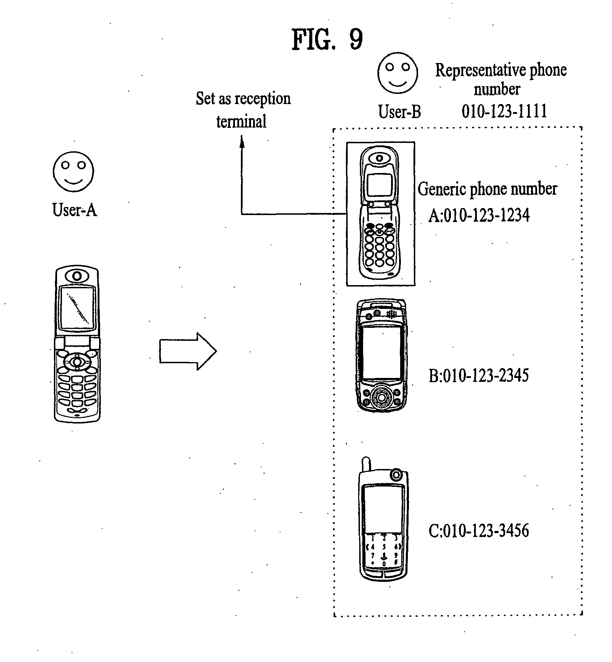

FIG. 9 is an exemplary diagram for explaining a communication according to a call reception setup in the second embodiment of the present invention.

Referring to FIG. 9, in case that a user-B sets a terminal-A (010-123-1234) to receive a call, if a user-A attempts a communication via a representative phone number (010-123-1111) of the user-B, a second switching system transmits a call signal to a phone number of the terminal-A that is a mobile phone. Hence, the user-B communicates with the user-A using the mobile phone.

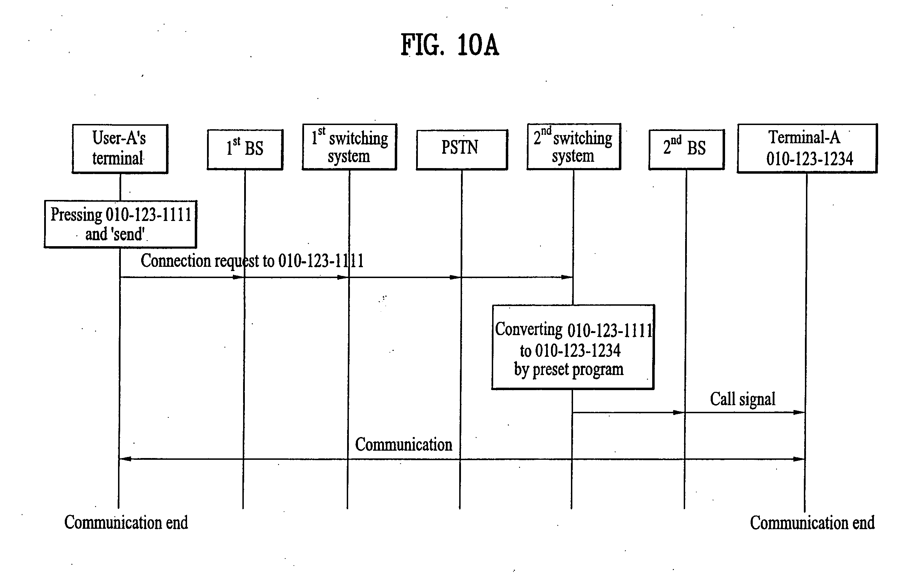

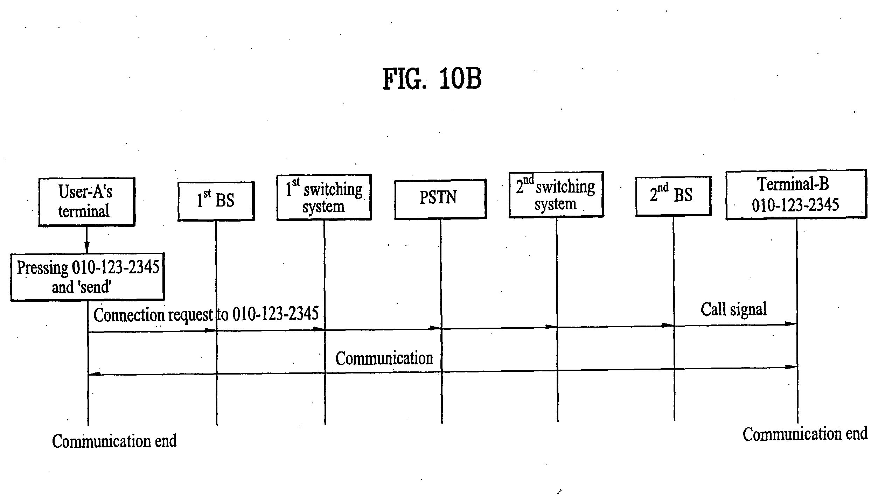

FIG. 10A and FIG. 10B are flowcharts of a communication procedure according to a call attempt in the second embodiment of the present invention, in which FIG. 10A shows a communication procedure if there is a call attempt through a representative phone number and in which FIG. 10B shows a communication procedure if there is a call attempt through a generic phone number of each terminal.

Referring to FIG. 10A, once a user-A presses '010-123-1111' and a 'send' button, a communication connection request to '010-123-1111' from a terminal of the user-A is received by a second switching system via a first base station, a first switching system and a mobile communication network or a general phone network such as PSTN (public switched telephone network). If the corresponding network is a mobile communication network, the first and second switching systems merge into one.

The second switching system checks a generic phone number of a reception terminal (terminal-A) previously set by a user-B for the representative phone number '010-123-1111' to which a communication connection is requested according to a preset program. Hence, the second switching system switches a phone number to be paged to '010-123-1234' from '010-123-1111'.

And, the second switching system transmits a call signal requested by the user-A via a second base station to the terminal-A.

Subsequently, as the user-B sends an affirmative reply signal for the communication request to the second switching system via the terminal-A, the communication between the user-A's terminal and the user-B's terminal-A is established.

Referring to FIG. 10B, once a user-A presses '010-123-1234#2' of one of several mobile communication terminals possessed by a user-B and a 'send' button, a communication connection request to '010-123-2345' from the corresponding terminal of the user-A is received by a second switching system via a first base station, a first switching system and a mobile communication network or a public telephone network such as PSTN (public switched telephone network).

And, the second switching system transmits a call signal requested by the user-A via a second base station to a terminal-B.

Subsequently, as the user-B sends an affirmative reply signal for the communication request to the second switching system via the terminal-B, the communication between the user-A's terminal and the user-B's terminal-B is established.

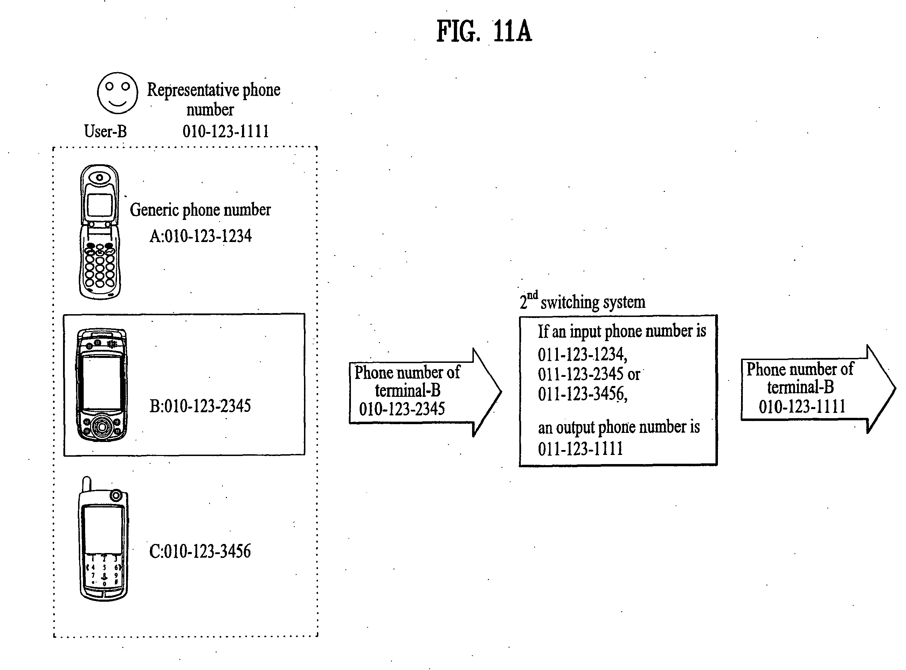

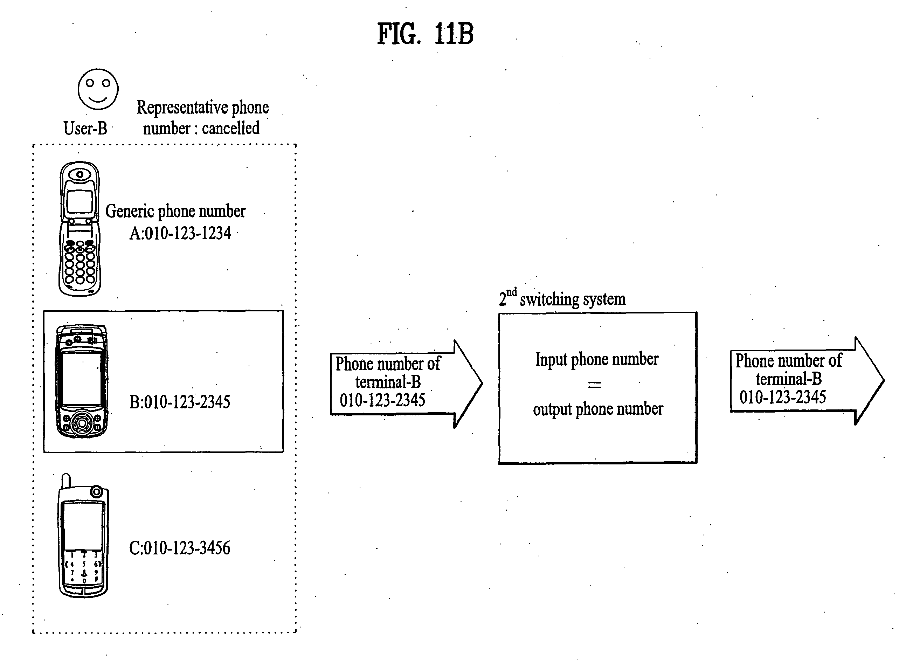

FIG. 11A and FIG. 11B are diagrams of a procedure of transmitting a phone number of a user (originator) in case that a user side using a representative phone number attempts a call in the second embodiment of the present invention.

Referring to FIG. 11A, in case of receiving a call attempt from a prescribed terminal of a user-B, a second switching system converts a phone number of the terminal having attempted a corresponding call to a representative phone number and then transmits the representative phone number as a phone number of an originator. Namely, as exemplarily shown in FIG. 11A, if the user-B requests a call using a terminal-B (PDA), a generic phone number '010-123-2345' of the terminal-B is inputted to the second switching system. If so, the second switching system outputs a preset representative phone number '010-123-1111' as an originator phone number.

The second switching system converts the inputted generic phone number to the representative phone number to output regardless of receiving the call attempt from any of the user-B's terminals.

In case that the set representative phone number '010-123-1111', as shown in FIG. 11B, is cancelled and if a user-B requests a call using a prescribed terminal, a second switching system transmits a generic phone number of the terminal used for the corresponding call request as an originator phone number.

Referring to FIG. 11B, if a user-B requests a call using a terminal-B (PDA) while a representative phone number is cancelled, a generic phone number '010-123-2345' of the terminal-B is inputted to the second switching system. If so, the second switching system directly outputs the inputted phone number as an output phone number to output the generic phone number of the terminal-B as an originator phone number.

FIG. 12 is an exemplary diagram for explaining a setup of a phone number of a mobile communication terminal and communications between terminals according to a third embodiment of the present invention.

Referring to FIG. 12, in the embodiment shown in FIG. 12, like the phone number setup of the mobile communication terminal in the aforesaid third example, generic phone numbers individually given by subscription to mobile communication terminals possessed by a user-B are used intact and one of the generic phone numbers of the user-B's mobile terminals is set as a representative phone number of the entire user-B's terminals.

In this case, like the first or second embodiment of the present invention, the set representative phone number is a number that identifies several mobile communication terminals of the user-B as one group.

A second base station providing a voice communication service to the mobile communication terminals of the user-B searches a paging channel of the user-B's mobile communication terminal by a slot cycle with reference to a slot cycle index. And, the second base station checks a connection state between itself and each of the mobile communication terminals. This is a communication process in idle state between the second base station and the user-B's mobile communication terminals.

Meanwhile, in the third embodiment of the present invention, the generic phone numbers given by subscription to the respective terminals are used intact.

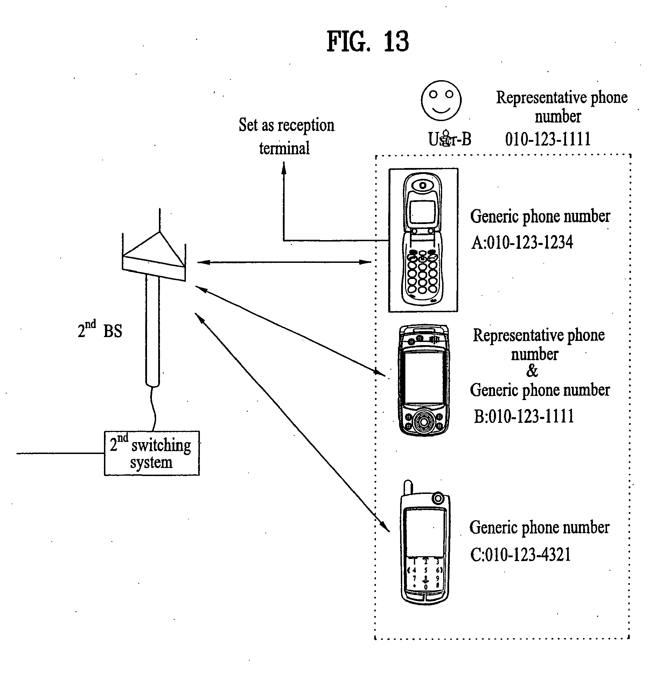

FIG. 13 is a diagram for explaining a call reception setup in communications between terminals after a phone number setup of a mobile communication terminal according to a third embodiment of the present invention.

Referring to FIG. 13, in case that a voice call is received via a preset representative phone number '010-123-1111' of a user-B possessing at least one or more mobile communication terminals, the user-B previously sets up a reception of the voice call through one of a terminal-A, terminal-B and terminal-C shown in FIG. 13. Namely, after the generic phone number of the terminal-B of PDA has been set as the representative phone number, even of the voice call is received to the phone number of the PDA, the terminal to receive the voice call is decided according to the reception terminal setup by the user-B.

The setup of the reception terminal of the voice call is a program setup of a second base station providing a mobile communication service to the mobile communication terminals of the user-B or a program setup of a second switching system that provides a mobile communication switching function to the second base station.

If the reception terminal of the voice call, as shown in FIG. 13, is previously set to the terminal-A (010-123-1234), the second switching system transmits a call signal to the generic phone number '010-123-1234' of the terminal-A in case that there is a call request to the representative phone number '010-123-1111' of the user-B.

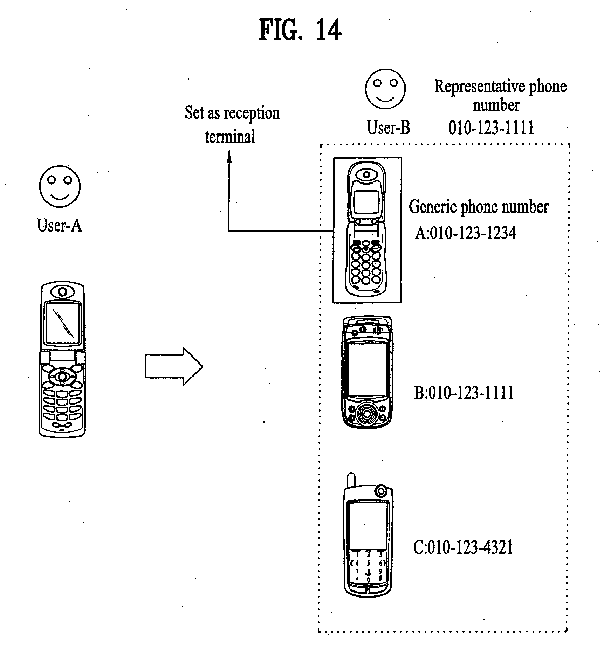

FIG. 14 is an exemplary diagram for explaining a communication according to a call reception setup in the third embodiment of the present invention.

Referring to FIG. 14, in case that a user-B sets a terminal-A (010-123-1234) to receive a call, if a user-A attempts a communication via a representative phone number (010-123-1111), i.e., a phone number of PDA of the user-B, a second switching system transmits a call signal to a phone number '010-123-1234' of the terminal-A that is a mobile phone. Hence, the user-B communicates with the user-A using the mobile phone.

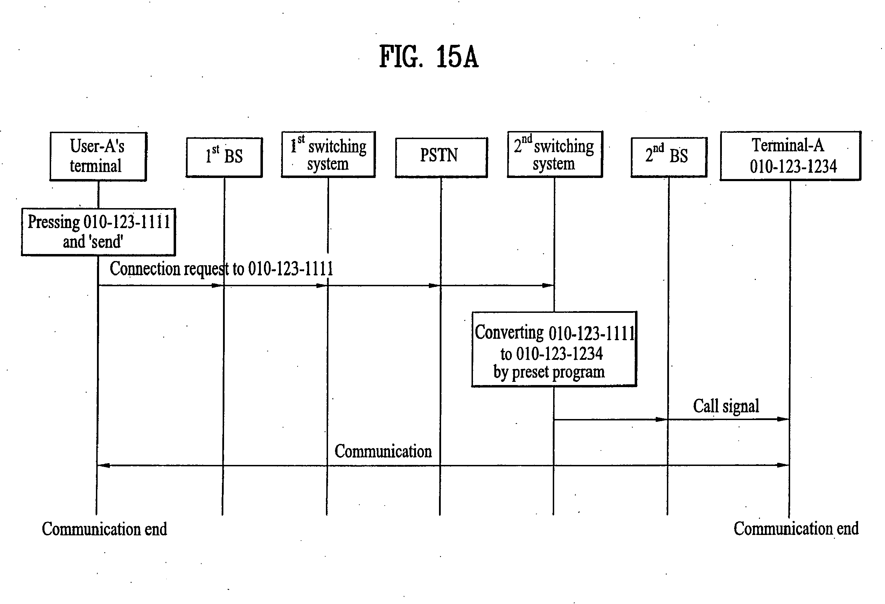

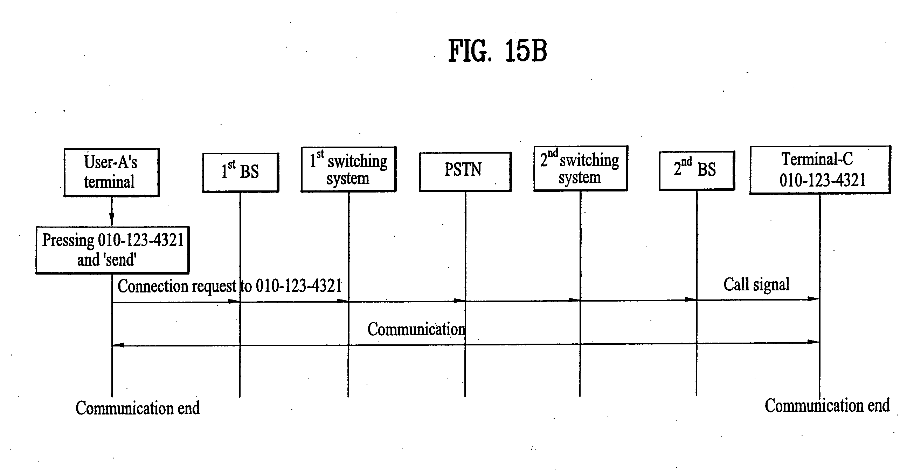

FIG. 15A and FIG. 15B are flowcharts of a communication procedure according to a call attempt in the third embodiment of the present invention, in which FIG. 15A shows a communication procedure if there is a call attempt through a representative phone number and in which FIG. 15B shows a communication procedure if there is a call attempt through a generic phone number of each terminal.

Referring to FIG. 15A, once a user-A presses '010-123-1111' and a 'send' button, a communication connection request to '010-123-1111' from a terminal of the user-A is received by a second switching system via a first base station, a first switching system and a mobile communication network or a general phone network such as PSTN (public switched telephone network). If the corresponding network is a mobile communication network, the first and second switching systems merge into one.

The second switching system checks a generic phone number of a reception terminal (terminal-A) previously set by a user-B for the representative phone number '010-123-1111' to which a communication connection is requested according to a preset program. Hence, the second switching system switches a phone number to be paged to '010-123-1234' from '010-123-1111'.

And, the second switching system transmits a call signal requested by the user-A via a second base station to the terminal-A.

Subsequently, as the user-B sends an affirmative reply signal for the communication request to the second switching system via the terminal-A, the communication between the user-A's terminal and the user-B's terminal-A is established.

Referring to FIG. 15B, once a user-A presses '010-123-4321' of one of several mobile communication terminals possessed by a user-B and a 'send' button, a communication connection request to '010-123-4321' from the corresponding terminal of the user-A is received by a second switching system via a first base station, a first switching system and a mobile communication network or a public telephone network such as PSTN (public switched telephone network).

And, the second switching system transmits a call signal requested by the user-A via a second base station to a terminal-C.

Subsequently, as the user-B sends an affirmative reply signal for the communication request to the second switching system via the terminal-C, the communication between the user-A's terminal and the user-B's terminal-C is established.

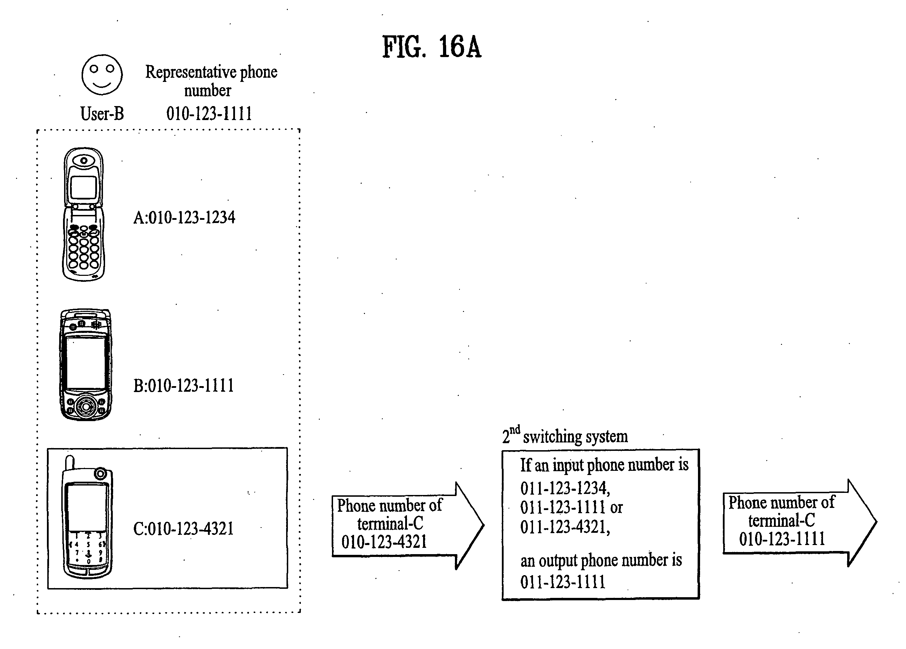

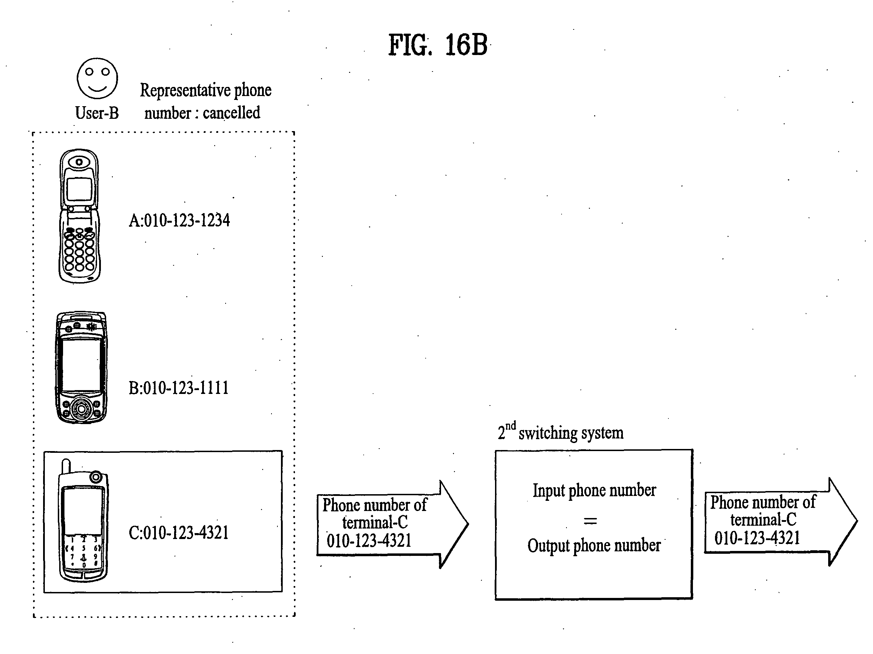

FIG. 16A and FIG. 16B are diagrams of a procedure of transmitting a phone number of a user (originator) in case that a user side using a representative phone number attempts a call in the third embodiment of the present invention.

Referring to FIG. 16A, in case of receiving a call attempt from a prescribed terminal of a user-B, a second switching system converts a phone number of the terminal having attempted a corresponding call to a representative phone number and then transmits the representative phone number as a phone number of an originator. Namely, as exemplarily shown in FIG. 16A, if the user-B requests a call using a terminal-C, a generic phone number '010-123-4321' of the terminal-C is inputted to the second switching system. If so, the second switching system outputs a preset representative phone number '010-123-1111' as an originator phone number.

The second switching system converts the inputted generic phone number to the representative phone number to output regardless of receiving the call attempt from any of the user-B's terminals.

In case that the set representative phone number '010-123-1111', as shown in FIG. 16B, is cancelled and if a user-B requests a call using a prescribed terminal, a second switching system transmits a generic phone number of the terminal used for the corresponding call request as an originator phone number.

Referring to FIG. 16B, if a user-B requests a call using a terminal-C while a representative phone number is cancelled, a generic phone number '010-123-4321' of the terminal-C is inputted to the second switching system. If so, the second switching system directly outputs the inputted phone number as an output phone number to output the generic phone number of the terminal-C as an originator phone number.

The above description is explained based on the voice communication service. Although the present invention is preferably applied to the voice communication service, the present invention is applicable to other mobile communication services as well as the voice communication service.

In the present invention, a billing is made to the set representative phone number. As the voice communication service is exemplarily explained, the voice communication service charges used by the entire terminals possessed by the user-B imposed on the representative phone number. It is more preferable that the entire terminals possessed by the user-B are subscribed to the same mobile communication service provider.

Therefore, in case that one user uses several mobile communication terminals, the present invention sets to use the representative phone number for each of the mobile communication services including the voice communication service and imposes the billing on each of the mobile communication services.

Accordingly, the present invention provides the following effects or advantages.

First of all, the present invention provides user's convenience if one subscriber uses a plurality of mobile communication terminals.

Secondly, in case that one subscriber uses a plurality of mobile communication terminals, the present invention enables the corresponding billing to be imposed on each mobile communication service, thereby providing facilitation and convenience.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of setting a phone number, comprising the steps of:
setting a representative number for a plurality of terminals; and
converting an incoming call to a random one of the terminals to the set representative phone number.

2. The method of claim 1, wherein the representative phone number is not a generic phone number of each of the terminals but a virtual phone number.

3. The method of claim 2, wherein the generic phone number of each of the terminals is set in a manner of combining at least one of special symbols and digits with the representative phone number.

4. The method of claim 1, wherein the representative phone number is set to one selected from the group consisting of generic phone numbers of the terminals.

5. The method of claim 1, wherein if there is a communication attempt to another terminal using the random one of the terminals, the set representative phone number is used as an originator phone number.

6. The method of claim 1, wherein the set representative phone number is a phone number for a mobile communication service supported by the terminals.

7. A method of setting a phone number of a mobile communication terminal, comprising the steps of:
setting a plurality of mobile communication terminals to a representative phone number for a prescribed mobile communication service; and
if there is an attempt of an incoming call to one of a plurality of the mobile communication terminals, transmitting the incoming call via the set representative phone number.

8. The method of claim 7, wherein the representative phone number is a virtual phone number different from a generic phone number of each of a plurality of the mobile communication terminals.

9. The method of claim 8, wherein the generic phone number of each of a plurality of the mobile communication terminals is given in a manner of combining at least one of special symbols and digits with the representative phone number.

10. The method of claim 7, wherein the representative phone number is set to one of generic phone numbers previously given to a plurality of the mobile communication terminals, respectively.

11. The method of claim 7, wherein a billing of the mobile communication terminals for the mobile communication service is imposed on the representative phone number.

12. The method of claim 7, wherein a plurality of the mobile communication terminals are possessed by one user.

13. The method of claim 7, wherein if there is an attempt of a communication to a different mobile communication terminal from a random one (A) of a plurality of the mobile communication terminals, a call of the communication is transmitted using the representative phone number as an originator phone number.

14. The method of claim 13, wherein if a setup of the representative phone number is cancelled, the call of the communication is transmitted using a generic phone number of the corresponding mobile terminal (A).
